# EUROPÄISCHE PATENTSCHRIFT

(11) **EP 0 960 230 B1**
(45) Veröffentlichungstag und Bekanntmachung des Hinweises auf die Patenterteilung: **18.09.2002**
(21) Anmeldenummer: 98910582.0
(22) Anmeldetag: 04.02.1998
(51) Int. Cl.: D06B 1/08, F16K 11/087

(54) **VENTILANORDNUNG UND DAFÜR VORGESEHENES VENTIL**
VALVE ARRANGEMENT AND VALVE FOR THE SAME
AGENCEMENT DE VANNES ET VANNE APPROPRIEE POUR CET AGENCEMENT

(30) Priorität: 12.02.1997 DE 19705259
(43) Veröffentlichungstag der Anmeldung: 01.12.1999
(73) Patentinhaber: Eduard Küsters Maschinenfabrik GmbH & Co. KG, 47805 Krefeld (DE)
(72) Erfinder: AHRWEILER, Karl-Heinz, D-47877 Willich (DE)
(74) Vertreter: Palgen, Peter, Dipl.-Phys. Dr.
(86) Internationale Anmeldenummer: DE9800307
(87) Internationale Veröffentlichungsnummer: WO98036122

(56) Entgegenhaltungen:
- DE-A- 2 900 712
- DE-U- 9 218 012
- FR-A- 2 539 204
- US-A- 2 558 260

## Beschreibung

Die Erfindung bezieht sich auf ein Ventil für fluide Medien der dem Oberbegriff des Anspruchs 1 entsprechenden Art.

Ein derartiges Ventil ist aus der DE-A-2 900 712 oder der US-A-2,558,260 bekannt. Der Einlaß des Ventilkörpers wird wahlweise mit einem von drei in einer zur Drehachse senkrechten Ebene unter 90° gegeneinander versetzt angeordneten Zuführkanälen zur Deckung gebracht. Die anderen Zuführkanäle sind derweil abgesperrt. Ihre Pumpen müssen entweder abgestellt werden oder arbeiten gegen einen erheblichen statischen Druck. In beiden Fällen gibt es in den Zuführkanälen Druckunterschiede, die besonders beim Umschalten von einem Zuführkanal auf einen anderen zu unerwünschten Druckschwankungen in dem Auslaß führen.

Der Erfindung liegt die Aufgabe zugrunde, ein gattungsgemäßes Ventil zu schaffen, bei dem derartige Druckschwankungen minimiert sind.

Diese Aufgabe wird durch die in Anspruch 1 wiedergegebene Erfindung gelöst.

Durch die erfindungsgemäße Konstruktion ist die Möglichkeit geschaffen, den Einlaß aus einem Zuführkanal zu versorgen, während der andere Zuführkanal bzw. die anderen Zuführkanäle mit dem jeweiligen Rücklauf verbunden sind. Die den Zuführkanälen zugeordneten Pumpen können also ohne Absperr-Druckänderungen weiterlaufen, wobei das fluide Medium der nicht mit dem Einlaß verbundenen Zuführleitung nicht in den Auslaß gelangt, sondern zirkuliert.

In einer vorteilhaften Bauform gemäß Anspruch 2 weist das Ventil einen kugeligen Mittelteil auf, in dem der Einlaß und der Auslaß ausgebildet sind.

Gemäß Anspruch 3 weist das Ventil mindestens drei Betätigungsstellungen auf, in denen der Einlaß mit dem einen oder anderen Zuführkanal verbunden oder geschlossen ist.

Der Drehantrieb des Ventils kann in der in Anspruch 4 wiedergegebenen Weise verwirklicht werden.

Ein bevorzugtes Anwendungsbeispiel der Erfindung ist die Behandlung von Farbflotten zum Bemustern oder Färben von Textilgut. Wie anhand des Anwendungsbeispiels noch beschrieben wird, kann in einer Bemusterungsvorrichtung ein balkenartiges gemeinsames Ventilgehäuse für eine Vielzahl erfindungsgemäßer Ventile vorgesehen sein, die entlang des Balkens aufgereiht sind und deren Auslaßkanäle in eine gemeinsame Auslaßzone in Gestalt eines sich längs des Balkens erstreckenden Auslaßschlitzes münden. Aus dem Austrittsschlitz geht die Flotte sogleich auf eine daran vorbeigeführte textile Warenbahn, zum Beispiel eine Teppichbahn, über. Von dem einzelnen Ventil bis zur Austrittsstelle des Austrittsschlitzes ist nur eine kurze Strecke zurückzulegen. Die von den einzelnen Ventilen abgegebenen Flottenmengen verbleiben im wesentlichen an ihrer Stelle quer zur Bahn, d.h. sie verbleiben unvermischt.

Ein anderer Anwendungsfall der Erfindung ist die Zubereitung von Färbeflotten. Die Ventile sind an die Vorratsbehälter der Grundkomponenten angeschlossen, und es werden die Ventile geöffnet, die den für die Herstellung einer bestimmten Färbeflotte benötigten Komponenten entsprechen. In diesem Fall sollen die einzelnen Komponenten am Ende gerade nicht unvermischt bleiben, sondern werden zu der fertigen Färbeflotte zusammengemischt. Vorher aber bleiben die Komponenten getrennt und werden in genau definierten Anteilen frei von Fehlern durch Druckschwankungen abgegeben.

Die Breite der Ventile quer zur Bahn und damit die Breite des von einem Ventil versorgten Bereichs der Auslaßzone können 20 bis 60 mm betragen. In Betracht kommende Teilungen sind insbesondere 25 und 50 mm. Die Feinheit der Teilung bestimmt auch die Feinheit einer mit der Vorrichtung hergestellten Bemusterung einer Warenbahn.

In der Zeichnung ist ein Anwendungsbeispiel eines erfindungsgemäßen Ventils in Gestalt einer einen sogenannten Auftragsbalken umfassenden Vorrichtung zum Bemustern von Teppichbahnen schematisch dargestellt.
Fig. 1 zeigt eine Seitenansicht einer solchen Vorrichtung mit dem Auftragsbalken;

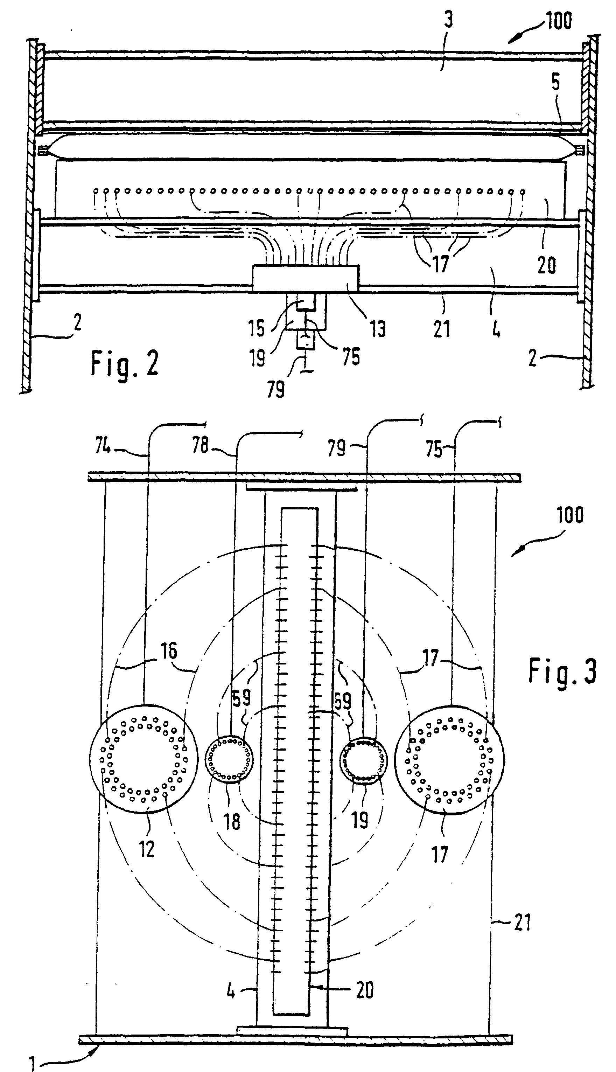

Fig. 2 zeigt eine Ansicht nach der Linie II-II in Fig. 1;
Fig. 3 zeigt eine Ansicht nach der Linie III-III in Fig. 1;
Fig. 4 zeigt einen Querschnitt durch den Auftragsbalken;
Fig. 5 zeigt eine vergrößerte Wiedergabe des in Fig. 4 mit V bezeichneten Bereichs mit dem erfindungsgemäßen Ventil;
Fig. 6 ist eine schematische Darstellung der Musterentstehung;
Fig. 7,8 und 9 sind Beispiele für erzeugbare Muster.

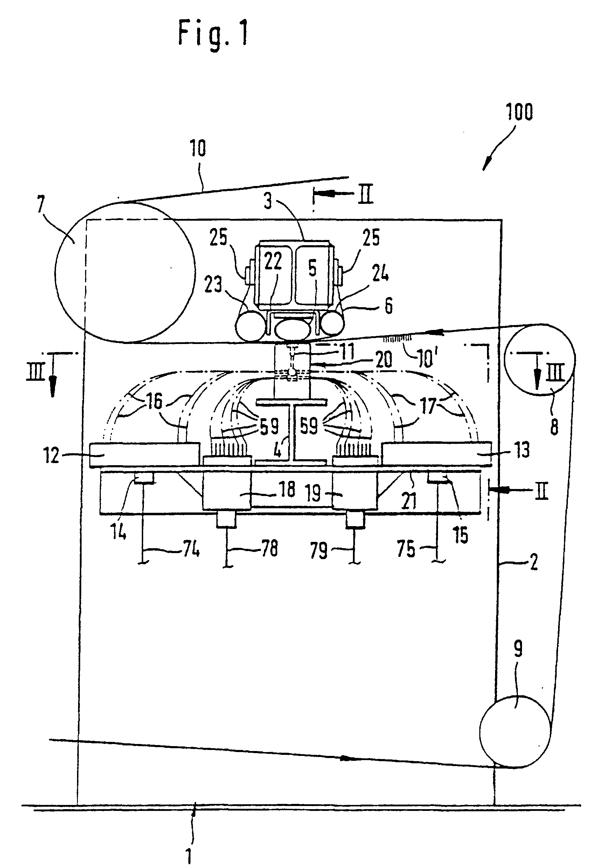

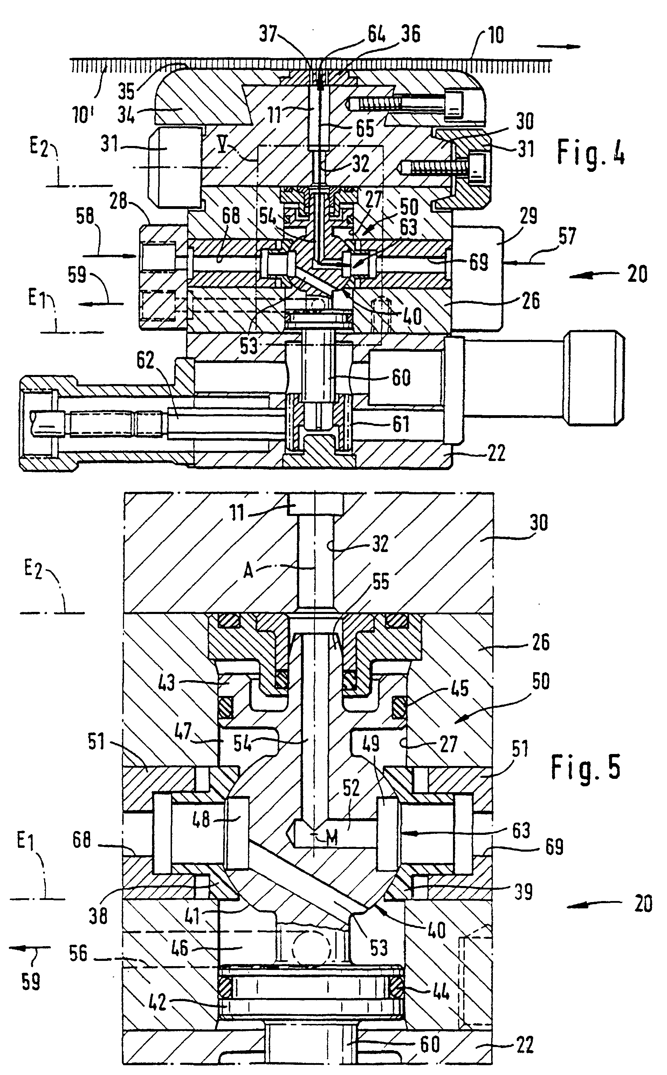

Die in den Fig. 1,3 und 4 als Ganzes mit 100 bezeichnete Vorrichtung umfaßt ein Maschinengestell 1 mit zwei seitlichen mit Querabstand einander gegenüberstehenden rechteckigen aufrechten Gestellplatten 2, die durch zwei im oberen Bereich übereinander angeordnete Querträger 3,4 miteinander verbunden sind, die als I-Träger ausgebildet sind, die mit ihrem Steg in der gleichen vertikalen und zu den Gestellplatten 2,2 senkrechten Ebene angeordnet sind. Der obere Querträger 3 bildet einen Stützbalken für ein unter ihm angeordnetes, sich zwischen den Gestellplatten 2,2 erstreckendes aufblasbares schlauchförmiges Druckkissen 5, unter welchem eine Gleitfolie 6 gespannt ist, gegen die das Druckkissen 5 gemäß den Fig. 1 und 3 von oben anliegt. Das Druckkissen 5 ist unter Belassung seitlichen Abstandes zwischen den Schenkeln eines nach unten offenen U-Profils 5' angeordnet, gegen die von außen zu dem Druckkissen 5 parallele Rohre 23,24 anliegen. Die Rohre 23,24 und das U-Profil 5' sind gemeinsam von der Gleitfolie 6 umschlungen, die mit ihren Rändern bei 25 an den Seiten des Querträgers 3 festgelegt ist. Auf diese Weise wurden Schwingungen des Druckkissens 5 und der Gleitfolie 6 in Laufrichtung der Warenbahn 10 vermieden.

Zwischen den Gestellplatten 2,2 sind in der Nähe eines vertikalen Randes in Höhe des Querbalkens 3 eine erste Umlenkwalze 7 und darunter am gegenüberliegenden vertikalen Rand übereinander zwei weitere Umlenkwalzen 8,9 angeordnet, von denen die Umlenkwalze 8 ihre Oberseite etwa in Höhe der Unterseite des Druckkissens 5 hat. Die Warenbahn 10 wird in der in Fig. 1 gezeigten Weise von unten um die Umlenkwalze 9 herum nach oben um die Umlenkwalze 8 und dann im wesentlichen horizontal mit dem Pol nach unten unter der Gleitfolie 6 hindurch um die Umlenkwalze 7 herum geführt, um dann gemäß Fig. 1 nach rechts aus der Vorrichtung 100 herausgeleitet zu werden.

Der mit Abstand unterhalb des Querbalkens 3 angeordnete Querbalken 4 dient als Stützbalken für den auf ihm angeordneten Auftragsbalken 20, der sich zwischen den Gestellplatten 2,2 senkrecht zu diesen fast über deren ganzen Abstand erstreckt und das gemeinsame Ventilgehäuse für eine Vielzahl, z.B. hundert oder zweihundert einzelne Ventile 50 bildet.

Der Auftragsbalken 20 wird im einzelnen anhand der Fig. 4 und 5 beschrieben. Er umfaßt eine in Fig. 1 nach oben offene, sich quer über die Breite der Warenbahn 10 erstreckende Auslaßzone 11, aus der ein Bemusterungsmittel, z.B. eine Färbeflüssigkeit, gemäß Fig. 1 nach oben in den Pol 10' der Warenbahn 10 austritt, die in dem Ausführungsbeispiel als Teppichbahn ausgebildet ist, wie durch den bei 10' wiedergegebenen Pol angedeutet ist. Die Warenbahn 10 läuft mit dem Pol 10' nach unten über die Auslaßzone 11.

Die Warenbahn 10 gleitet über die Oberseite des Auftragsbalkens 20 an der Auslaßzone 11 entlang, wobei dort ein das fluide Medium bildendes Bemusterungsmittel, in dem Ausführungsbeispiel Färbeflotte, in den Pol 10' der Warenbahn 10 hineingedrückt wird. Auf der der Auslaßzone 11 gegenüberliegenden Seite gleitet der Rücken der Warenbahn 10 an der durch das Druckkissen 5 elastisch hinterlagerten Gleitfolie 6 entlang. Der Austrittsbereich der Auslaßzone 11 wird also durch die Warenbahn 10 selbst seitlich abgedichtet, weil die Warenbahn 10 mit einem gewissen Druck gegen die Berandung der Auslaßzone 11 angedrückt wird.

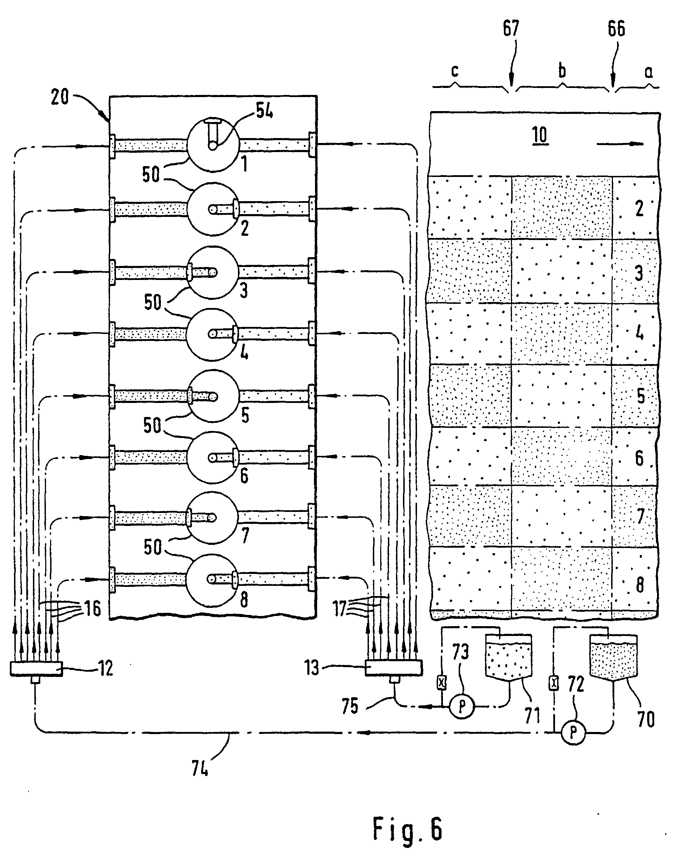

Dem Auftragsbalken 20 werden in dem Ausführungsbeispiel zwei Bemusterungsmittel aus entsprechenden Verteilern 12,13 zugeführt, die an den Anschlüssen 14,15 über Leitungen 74,75 mit entsprechenden Vorratsbehältern 70,71 in Verbindung stehen, aus denen die Bemusterungsmittel mittels Pumpen unter Druck herangeführt werden (Fig. 6). Die Bemusterungsmittel werden in den Verteilern 12,13 jeweils auf eine Vielzahl von einzelnen Leitungen 16 bzw. 17 aufgeteilt, die an über die Arbeitsbreite verteilten Stellen in den Auftragsbalken 20 münden.

18 und 19 sind Sammelköpfe, in die die in Zusammenhang mit den Fig. 4 und 5 beschriebenen Rückläufe 59 münden und aus denen das nicht aufgetragene Bemusterungsmittel über Leitungen 78,79 in die Vorratsbehälter 70,71 zurückgeführt oder in den Kanal abgeleitet wird. Die ganze Anordnung ist auf einer horizontalen Querplatte 21 unterhalb des Querträgers 4 angebracht.

Wie aus Fig. 4 ersichtlich ist, hat der Auftragsbalken 20 einen im wesentlichen rechteckigen aufrechten Querschnitt. Er besteht aus mehreren ihrerseits ebenfalls einen Rechteckquerschnitt aufweisenden Teilen, die übereinander angeordnet sind. Das unterste Teil 22 ist das Antriebsteil. Darauf ist das Ventilteil 26 befestigt, welches eine Vielzahl von zur Warenbahn 10 senkrechten, einander parallelen, quer zur Arbeitsbreite aufgereihten zylindrischen Ventilkammern 27 umfaßt, deren Achsen A sämtlich in der Austrittsebene, d.h. der zur Warenbahn 10 senkrechten Längsmittelebene des Auftragsbalkens 20 und insbesondere der schlitzförmigen Auslaßzone 11 gelegen sind.

Auf dem Ventilteil 26 ist das Austrittsteil 30 mittels Klemmstücken 31 befestigt. Das Austrittsteil 30 weist eine über die Arbeitsbreite durchgehende, gegen die Warenbahn 10 hin offene Auslaßzone 11 und an der Stelle jeder Ventilkammer 27 einen zu dieser koaxialen durch eine Bohrung gebildeten Zwischenkanal 32 auf.

Die Oberseite des Austrittsteils 30 ist von einem Gleitschuh 34 überdeckt, der eine Gleitfläche 35 bildet, auf der die Warenbahn 10 mit dem Pol 10' entlanggleitet. Der Gleitschuh 34 ist in der aus Fig. 4 ersichtlichen Weise geteilt und legt vor der Mündung der Auslaßzone 11 eine Lochplatte 36 fest, die im Querschnittsbereich der Auslaßzone 11 eine Vielzahl von dicht beieinander gleichmäßig verteilten feinen Durchgangsbohrungen 37 aufweist, durch die das in der Auslaßzone 11 anstehende Bemusterungsmittel gleichmäßig verteilt in die Warenbahn 10 übertritt.

In jeder Ventilkammer 27 ist ein Ventilkörper 40 drehbar angeordnet, der einen kugeligen Mittelteil 41 und zu beiden Seiten desselben in geringem axialen Abstand je einen scheibenförmigen Dichtsteg 42,43 mit einer gegen den Innenumfang der Ventilkammer 27 abdichtenden Umfangsdichtung 44,45 aufweist. Der Durchmesser des kugeligen Mittelteils 41 entspricht etwa dem der Ventilkammer 27.

Zwischen dem kugeligen Mittelteil 41 und den Dichtstegen 42,43 sind Ringräume 46,47 gebildet, die durch die Dichtstege 42,43 axial nach außen abgedichtet sind.

Der Ventilkörper 40 weist in seinem kugeligen Mittelteil 41 einander gegenüberliegende Anschlußstellen 48,49 auf, gegen deren Rand auf der Kugelfläche von außen eine kugelige Dichtfläche aufweisende Dichtbuchsen 38,39 anliegen. Die Dichtbuchsen 38,39 sind in Hülsen 51 angeordnet, die auf diametral einander gegenüberliegenden Seiten des kugeligen Mittelteils in dem Ventilteil 26 angebracht sind und Zuleitungskanäle 68,69 bilden. Die Hülsen 51 gehen durch das Ventilteil 26 bis nach außen hindurch und stellen die Verbindung zu Anschlußstücken 28,29 her, die an den beiden einander gegenüberliegenden Seiten des Ventilteils 26 befestigt sind.

Die geschilderte Ausführungsform betrifft den Fall, daß jedem Ventil 50 zwei Bemusterungsmittel an zwei Zuleitungskanälen 68,69 zuführbar sind. Dies ist zwar der praktisch wichtigste Fall, doch wäre es grundsätzlich auch möglich, wenn auch konstruktiv schwieriger, jedes Ventil 50 mit mehr als zwei Bemusterungsmitteln zu beaufschlagen.

Von der Einlaßstelle 49 (Fig. 5) geht ein durch eine bezüglich des Kugelmittelpunktes M radiale Bohrung gebildeter Einlaß 52 bis zur Mitte des kugeligen Teils und dort in einen in Achsrichtung des Ventilkörpers 40 verlaufenden Auslaßkanal 54 über, der sich in einem stutzenartigen Ansatz 55 bis über die äußere Stirnseite des Dichtsteges 43 hinaus erstreckt und mit dem dortigen Zwischenkanal 32 in dem Austrittsteil 30 fluchtet. Der Durchmesser des Zwischenkanals 32 ist etwas größer als der des Austrittskanals 54.

Von der gegenüberliegenden Einlaßstelle 48 führt ein Schrägkanal 53 in den dem Auslaßkanal 54 bezüglich des Kugelmittelpunktes M gegenüberliegenden Ringraum 46, der seinerseits über einen gestrichelt wiedergegebenen Kanal 56 mit dem Anschlußstück 28 und dem Rücklauf 59 in Verbindung steht.

In der in den Fig. 4 und 5 dargestellten Arbeitsphase wird dem Anschlußstück 29 aus einem der Vorratsbehälter 70,71 über einen der Verteiler 12,13 an einem Zulauf 57 ein erstes Bemusterungsmittel zugeführt, das über den Zuführkanal 69 in der Hülse 51, den Einlaß 52, den Auslaßkanal 54, den Zwischenkanal 32 und die Auslaßzone 11 auf die Warenbahn 10 übertragen wird. Die Pumpen 72,73 beider Bemusterungsmittel laufen ständig. Während der Zuführung zur Warenbahn 10 über den Zulauf 57 wird also auch über den Zulauf 58 das andere Bemusterungsmittel zugeführt. Es gelangt jedoch über den Zuleitungskanal 68, die Einlaßstelle 48 und den Schrägkanal 53 in den Ringraum 46 und von dort über den Kanal 56 sogleich wieder in den Rücklauf 59, d.h. es zirkuliert in seinem Leitungssystem oder wird abgeleitet. Auf diese Weise können die Pumpen 72,73 kontinuierlich weiterlaufen, ohne daß es Druckstöße in den Bemusterungsflüssigkeiten gibt.

Soll das andere Bemusterungsmittel auf die Warenbahn 10 gelangen, wird der Ventilkörper 40 in der Ventilkammer 27 um 180° gedreht, so daß die Einlaßstelle 49 nunmehr mit dem Zulauf 58 verbunden ist und das an dem Zulauf 57 zugeführte Bemusterungsmittel in den Rücklauf 59 gelangt.

Der Antrieb bei dieser Umschalt-Drehbewegung erfolgt über einen in der Achse des Ventilkörpers 40 angeordneten, in den Antriebsteil 22 hineinreichenden koaxialen Antriebszapfen 60, der am Ende ein Ritzel 61 trägt, welches auf eine beliebige Weise von einem seitlich in den Antriebsteil 22 eingreifenden Antriebsglied 62 betätigbar ist. Für die Erfindung spielt die Art, wie die Drehung des Ritzels 61 erzeugt wird, weiter keine Rolle. Das Antriebsglied 62 kann eine zahnstangenartige Struktur aufweisen und einen Längshub ausführen. Es ist aber auch möglich, daß sich das Antriebsglied 62 dreht und mit dem Ritzel 61 einen Schneckentrieb bildet.

Wichtig ist, daß die durch den Pfeil 65 wiedergegebene Strecke von der Schließstelle 63 des Ventilkörpers 40 bis zur Austrittsstelle 64 der Auslaßzone 11 an der Warenbahn 10 so kurz ist, wie sich dies konstruktiv einrichten läßt. Die Strecke beläuft sich in dem Ausführungsbeispiel auf etwa 6 cm. Die Strecke 65 ist durch die Ausdehnung des Ventilkörpers 40 und die Ausdehnung des Austrittsteils 30 vorgegeben, wobei in Letzterem die Auslaßzone 11 aufgrund des Druckausgleichs und der gleichmäßigen nicht zur Querströmungen neigenden Verteilung des Bemusterungsmittels einen gewissen Querschnitt und somit eine gewisse Tiefe aufweisen muß.

In Fig. 6 ist ein Betriebsbeispiel wiedergegeben, bei welchem auf der Warenbahn 10 eine Bemusterung mit rechteckigen Musterfeldern erzeugt wird. Es ist das eine Ende des Auftragsbalkens 20 mit den ersten acht entsprechend numerierten Ventilen 50 dargestellt. Das äußerste in Fig. 6 oben dargestellte Ventil 1 nimmt die 90°-Stellung ein, d.h. es ist geschlossen. In seinem Bereich wird kein Bemusterungsmittel auf die Warenbahn 10, die in Fig. 6 rechts dargestellt ist, abgegeben. Dies liegt daran, daß der unregelmäßig konturierte Rand der Warenbahn 10 frei von Bemusterungsmittel bleiben soll bzw. daß kein Bemusterungsmittel außerhalb des Randes der Warenbahn 10 austreten soll.

Dargestellt ist in dem linken Teil der Fig. 6 die Betriebsphase, die dem Auftrag auf den Abschnitt a der Warenbahn 10 entspricht. Hierbei erhalten die Ventile 2,4,6,8 Bemusterungsmittel aus dem Verteiler 13 und übertragen es auf die Warenbahn 10. Dies ist durch eine weite Punktierung wiedergegeben. Die Ventile 3,5 und 7 hingegen haben Bemusterungsmittel aus dem Verteiler 12 enthalten, was durch eine dichte Punktierung wiedergegeben ist.

An der Stelle 66 erfolgte ein Umschalten. Die bisher von dem Verteiler 13 versorgten Ventile 2,4,6,8 erhielten nunmehr während des Durchlaufs des Abschnittes b Bemusterungsmittel aus dem Verteiler 12, was durch die dichte Punktierung wiedergegeben wird. Die dazwischen liegenden Ventile 3,5,7 erhielten Bemusterungsmittel aus dem Verteiler 13. An der Stelle 67 erfolgte ein erneutes Umstellen, so daß in dem Abschnitt c die Aufteilung der Felder wieder wie in dem Abschnitt a war. Alle Ventile 50 sind einzeln betätigbar, d.h. ihre Ventilkörper 40 können über ihre jeweils zugeordneten Antriebe 60,61,62 unabhängig von den anderen Ventilen 50 verdreht werden. Die Umsteuerung bei der Vielzahl von Ventilen erfolgt zweckmäßig durch eine geeignete Programmsteuerung.

Wenn mit der Vorrichtung uni gefärbt wird, erhalten alle Ventile 50 das gleiche Bemusterungsmittel, d.h. die gleiche Färbeflotte. Ein Umschalten der Ventile erfolgt während des Unifärbens nicht. Nur wenn auf eine andere Farbe übergegangen werden soll, werden alle Ventile gleichzeitig auf die neue Färbeflotte umgeschaltet.

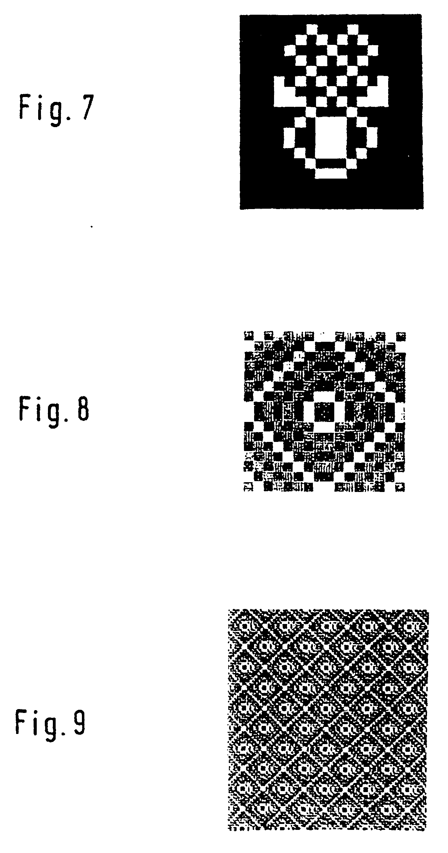

Eine Bemusterung muß nicht in der regelmäßigen schachbrettartigen Weise der Fig. 6 erfolgen. Es können durch geeignete Ansteuerung der Ventile 50 auch über die Fläche der Warenbahn 10 verteilte Einzelmuster etwa nach Fig. 7 erzeugt werden.

Auch kann die Vorrichtung 100 mehrere in Laufrichtung der Warenbahn 10 gestaffelt hintereinander angeordnete Auftragsbalken 20 umfassen, die nacheinander Bemusterungsmittel an die Warenbahn 10 abgeben. Mit einer solchen Anordnung können auch mehr als zwei verschiedene Bemusterungsmittel verarbeitet werden. Es versteht sich, da,3 die Steuerung dabei auf den richtigen Rapport zwischen den einzelnen Auftragsbalken 20 zu achten hat. Erzeugt werden können auf diese Weise Bemusterungen etwa nach Fig. 8, was in verkleinerter Form auf einem Teppich etwa so aussieht, wie es aus Fig. 9 ersichtlich ist.

## Patentansprüche

1. Ventil für fluide Medien mit einem Ventilgehäuse (20), einer darin ausgebildeten zylindrischen Ventilkammer (27) und einem in der Ventilkammer (27) zwischen verschiedenen Betätigungsstellungen verdrehbaren Ventilkörper (40),
wobei der Ventilkörper (40) einen in der Drehachse (A) gelegenen Auslaßkanal (54) und mindestens einen seitlichen, mit dem Auslaßkanal (54) verbundenen Einlaß (52) aufweist und ihm mindestens zwei von einander gegenüberliegenen Seiten in die Ventilkammer (27) in gleicher axialer Position derselben mündende Zuführkanäle (68, 69) zugeordnet sind, die durch Drehung des Ventilkörpers (40) wahlweise mit dem Einlaß (52) in Flüssigkeitsverbindung bringbar sind,
**dadurch gekennzeichnet,**
**daß** der Ventilkörper (40) einen Mittelteil (41) mit in einer zur Drehachse (A) senkrechten Mittelebene um die Drehachse (A) verteilt angeordnete Anschlußstellen (48, 49) aufweist, die mit dem Einlaß (52) bzw. mindestens einem Schrägkanal (53) in dem Mittelteil (41) in Verbindung stehen und durch Drehung des Ventilkörpers (40) derart mit dem einen oder anderen Zuführkanal (68, 69) zur Deckung bringbar sind, daß alle Anschlußstellen (48, 49) jeweils einem Zuführkanal (68, 69) gegenüberstehen
und **daß** an dem Mittelteil (41) auf jeder Seite, in Achsrichtung des Ventilkörpers (40) gesehen, mit der zylindrischen Ventilkammer (27) zusammenwirkende Dichtstege (42, 43) vorgesehen sind, die jeweils durch eine Querschnittsverengung des Ventilkörpers (40) von dessen Mittelteil (41) getrennt sind,
und **daß** der Schrägkanal (53) in eine (46) der Querschnittsverengungen ausmündet und daß von der Ventilkammer (27) im Bereich dieser Querschnittsverengung (46) ein Rücklauf (59) ausgeht.

2. Ventil nach Anspruch 1, **dadurch gekennzeichnet, daß** der Mittelteil (41) des Ventilkörpers (40) kugelig ausgebildet ist.

3. Ventil nach Anspruch 1 oder 2, **dadurch gekennzeichnet, daß** das Ventil (50) mindestens drei Betätigungsstellungen aufweist, in denen der Einlaß (52) mit dem einen oder anderen Zuführkanal (68, 69) verbunden oder geschlossen ist.

4. Ventil nach einem der Ansprüche 1 bis 3, **dadurch gekennzeichnet, daß** der Ventilkörper (40) jedes Ventils (50) auf der der Mündung des Auslaßkanals (54) abgelegenen Seite einen zu der Achse (A) des Ventilkörpers (40) koaxialen Antriebszapfen (60) aufweist.

## Claims

1. A valve for fluid media with a valve housing (20), a cylindrical valve chamber (27) constructed therein, and a valve member (40) adapted to rotate between different actuation positions in the valve chamber (27),
the valve member (40) comprising an outlet duct (54) situated along the axis of rotation (A) and at least one inlet (52) connected to the outlet duct (54), and being associated with at least two feed ducts (68, 69) which lead into the valve chamber (27) in the same axial position from opposite sides, said feed ducts being adapted to be brought optionally into liquid connection with the inlet (52) by rotation of the valve member (40),
**characterised in that**
the valve member (40) comprises a middle part (41) with connection points (48, 49) distributed around the rotational axis (A) in a central plane perpendicular to the rotational axis (A), said connection points being in communication with the inlet (52) or at least one inclined duct (53) in the middle part (41) and being adapted to be brought into register with one or other feed duct (68, 69) by rotation of the valve member (40) in such manner that all the connection points (48, 49) are each opposite a feed duct (68, 69),
and **in that** sealing webs (42, 43) are provided on the middle part (41) on each side as considered in the axial direction of the valve member, said sealing webs co-operating with the cylindrical valve chamber (27) and each being separated from the middle part (41) of the valve member (40) by a cross-sectional constriction thereof,
and **in that** the inclined duct (53) opens into one (46) of the cross-sectional constrictions and **in that** a return (59) extends from the valve chamber (27) in the region of said cross-sectional constriction (46).

2. A valve according to claim 1, **characterised in that** the middle part (41) of the valve member (40) is spherical.

3. A valve according to claim 1 or 2,
**characterised in that** the valve (50) has at least three actuation positions in which the inlet (52) is connected to one or other feed duct (68, 69) or is closed.

4. A valve according to any one of claims 1 to 3, **characterised in that** on the side remote from the orifice of the outlet duct (54) the valve member (40) of each valve has a drive pin (60) coaxial with the axis (A) of the valve member (40).

## Revendications

1. Vanne pour des fluides comprenant un corps de vanne (20) avec une chambre cylindrique (27) réalisée dans celui-ci et un corps de soupape (40) pouvant tourner dans la chambre de soupape (27) entre différentes positions d'actionnement,
le corps de vanne (40) ayant un canal de sortie (54) situé dans l'axe de rotation (A) et au moins une entrée (52), latérale, reliée au canal de sortie (54) et des canaux d'alimentation (68, 69) débouchant dans au moins deux côtés opposés dans la chambre de soupape (27), dans la même position axiale, ces canaux pouvant être mis en communication de fluide avec l'entrée (52) par rotation sélective du corps de vanne (40),
**caractérisée en ce que**
le corps de vanne (40) comporte une partie centrale (41) avec des points de raccordement (48, 49) répartis autour de l'axe de rotation (A), dans un plan médian perpendiculaire à l'axe de rotation (A), ces points de raccordement communiquant avec l'entrée (52) ou au moins un canal incliné (53) de la partie médiane (41) et pouvant, par rotation du corps de vanne (40) être mis en correspondance avec l'un ou l'autre canal d'alimentation (68, 69) pour que tous les points de raccordement (48, 49) soient respectivement en regard d'un canal d'alimentation (68, 69), et
au niveau de la partie centrale (41), de chaque côté, lorsqu'on regarde dans la direction axiale du corps de vanne (40), des nervures d'étanchéité (42, 43) coopérant avec la chambre de vanne (27) cylindrique, sont séparées de la partie médiane (41) chaque fois par un rétrécissement de la section du corps de vanne (40), et
le canal incliné (53) débouche dans l'un (46) des rétrécissements de section, alors qu'un retour (59) est issu de la chambre de vanne (27), de la zone du rétrécissement de section (46).

2. Vanne selon la revendication 1,
**caractérisée en ce que**
la partie médiane (41) du corps de vanne (40) est de forme sphérique.

3. Vanne selon l'une quelconque des revendications 1 ou 2,
**caractérisée en ce que**
la vanne (50) comporte au moins trois positions d'actionnement dans lesquelles l'entrée (52) est reliée à l'un ou l'autre canal d'alimentation (68, 69) ou est fermé.

4. Vanne selon l'une quelconque des revendications 1 à 3,
**caractérisée en ce que**
sur le côté opposé à l'embouchure du canal de sortie (54), le corps de vanne (40) de chaque vanne (50) présente un tourillon d'entraînement (60) coaxial à l'axe (A) du corps de vanne (40).
